# FASCICULE DE BREVET EUROPEEN

(11) **EP 2 656 476 B1**
(45) Date de publication et mention de la délivrance du brevet: **18.05.2016**
(21) Numéro de dépôt: 11757323.8
(22) Date de dépôt: 15.09.2011
(51) Int. Cl.: H02J 7/34, B60L 9/00, B60L 11/18, B60W 10/26

(54) **MÉTHODE DE RÉGLAGE DE TENSION D'ALIMENTATION ÉLECTRIQUE POUR UN FONCTIONNEMENT D'AU MOINS UN VÉHICULE ALIMENTÉ ÉLECTRIQUEMENT**
VERFAHREN ZUR EINSTELLUNG DER ELEKTRISCHEN VERSORGUNGSSPANNUNG ZUM BETRIEB VON MINDESTENS EINEM ELEKTRISCH BETRIEBENEN FAHRZEUG
METHOD OF ADJUSTING THE ELECTRICAL SUPPLY VOLTAGE FOR THE OPERATION OF AT LEAST ONE ELECTRICALLY POWERED VEHICLE

(30) Priorité: 23.12.2010 EP 10290676
(43) Date de publication de la demande: 30.10.2013
(73) Titulaire: Siemens S.A.S., 93527 Saint-Denis Cedex (FR)
(72) Inventeur: BAVARD, Xavier, F-62123 Bailleulval (FR); CHATTOT, Eric, F-92190 Meudon (FR); VERHILLE, Jean-Noël, F-62590 Oignies (FR)
(74) Mandataire: Maier, Daniel Oliver
(86) Numéro de dépôt international: PCT/EP2011/066026
(87) Numéro de publication internationale: WO 2012/084281

(56) Documents cités:
- WO-A1-2009/153416
- DE-A1-102008 030 342
- FR-A1- 2 819 759
- FR-A1- 2 866 607
- REINER K: "EINSATZMOGLICHKEITEN FUR ENERGIESPEICHER IM ELEKTRISCHEN BAHNBETRIEB", ELEKTRISCHE BAHNEN, OLDENBOURG INDUSTRIEVERLAG, MUNCHEN, DE, vol. 91, no. 10, 1 octobre 1993 (1993-10-01), pages 331-335, XP000398565, ISSN: 0013-5437

## Description

La présente invention concerne principalement une méthode de réglage de tension d'alimentation électrique pour un fonctionnement d'au moins un véhicule alimenté électriquement selon le préambule de la revendication 1.

Les systèmes de réseaux d'alimentation d'énergie de traction d'une ligne de métro (ou autres véhicules de transports publics tels que tramway, trolley, bus, trains, unités de transport sans chauffeur, etc.) subissent des fluctuations énergétiques dépendant du nombre de véhicules en ligne mais également de leur synchronisme. Ces variations de flux énergétique ont une action prépondérante sur la qualité de distribution de l'énergie assurée par des rails d'alimentation ou autres moyens similaires. Ces variations et ainsi ladite qualité sont ainsi dépendantes des caractéristiques linéiques des rails de distribution mais sont également fonction de la distance séparant les sources d'alimentation des équipements fixes du véhicule. Il en résulte de fortes variations de tension d'alimentation des véhicules et leurs équipements embarqués qui, captées par les frotteurs mécaniques du véhicule sur un rail d'alimentation, sont à l'origine des perturbations pouvant affecter les dispositifs de propulsion.
Une sous-alimentation des dispositifs de propulsion est un phénomène aggravant puiqu'il conduit très généralement à des surintensités.
Pour des véhicules équipés d'entraînements modernes à champ tournant, la qualité de la tension d'entrée de convertisseurs à pulsation est beaucoup plus importante que pour des véhicules plus anciens qui utilisaient principalement des machines à courant continu. Lorsque la tension ne correspond plus à une limite inférieure, des mécanismes sont alors mis en place afin d'éviter des comportements de propulsion erratiques. A titre d'exemple, un défluxage d'une machine/composante électrique est une solution embarquée possible qui répond à cette problématique, mais sa mise en oeuvre accroît les pertes de ladite machine et est de fait à l'origine d'un rendement énergétique en baisse.

Un dimensionnement des installations de distribution d'énergie d'une ligne de métro composé de rames ou véhicules propulsés, calculé pour une capacité maximale du nombre de véhicules en ligne, autorise l'exploitation de cette ligne dans tous les modes de fonctionnement (heures de pointe et heures creuses). Le dimensionnement des installations tient compte des crêtes de puissance de façon à garantir la disponibilité et la fiabilité du système. Pour remédier à une baisse de la qualité de la distribution de l'énergie par les rails d'alimentation, des « feeders » (alimentations électriques) sont installées pontuellement (le long de la ligne) pour limiter de trop fortes chutes de tension ainsi que des pertes en ligne. La nécessité de la mise en place de feeders est subordonnée à une limite inférieure de tension d'alimentation délivrée par les rails qu'il convient de ne pas dépasser et au-delà de laquelle le fonctionnement d'équipements embarqués dans les véhicules n'est plus garanti. En définissant une zone d'alimentation en énergie travaillant dans une large plage et ne nécessitant pas d'actions correctrices (installation de feeders), on réalise alors un compromis entre les performances énergétiques du système et les coûts d'installation, ce qui constitue un dilemme délicat à résoudre.

On note enfin le document "EINSATZMOGLICHKEITEN FUR ENERGIESPEICHER IM ELEKTRISCHEN BAHNBETRIEB", ELEKTRISCHE BAHNEN, OLDENBOURG INDUSTRIEVERLAG, MUNCHEN, DE, vol. 91, no. 10, 1 octobre 1993 (1993-10-01), pages 331-335 de Klaus Reiner qui décrit un système selon le préambule de la revendication 1.

Un but de la présente invention est de proposer une méthode de réglage de tension d'alimentation électrique pour un fonctionnement d'au moins un véhicule alimenté par au moins :
- une première unité de stockage d'énergie électrique embarquée dans le véhicule,
- un réseau électrique au sol fournissant au véhicule au moins un apport en énergie par application d'une tension d'alimentation via un moyen de distribution électrique, ladite méthode permettant au moins de minimiser des variations de flux énergétiques dans un réseau d'alimentation de transports publics.

Une solution est présentée par la méthode de réglage de tension d'alimentation électrique au travers de la revendication 1.

Un ensemble de sous-revendications présente également des avantages de l'invention.

Des exemples de réalisation et d'application sont fournis à l'aide de figures décrites :
- Figure 1: Exemple applicatif de la méthode selon l'invention selon un schéma de transport public,
- Figure 2: Représentation de paramètres liés à la méthode selon l'invention : (a) tension de rail captée par des véhicules, (b) courants absorbés par des sources, (c) courants d'unités de stockage, (d) vitesses de véhicules.

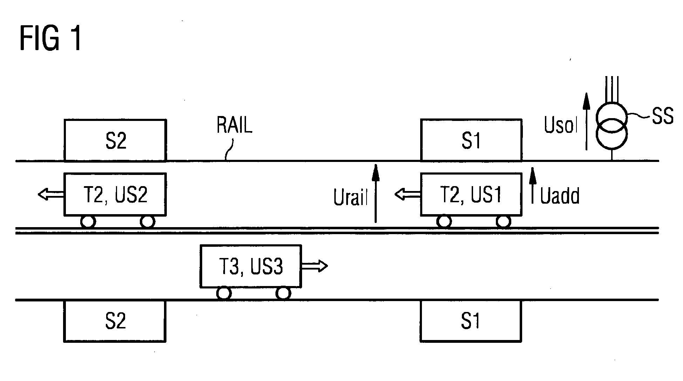

La figure 1 présente un exemple applicatif simulé de la méthode selon l'invention pour un tronçon de voies bidirectionnelles, alimenté par une sous-station SS sous une tension Usol (= 750V) et comportant trois trains T1, T2, T3 (T1 et T2 étant sur la voie en sens de marche gauche et T3 étant sur la deuxième voie en sens de marche droite). Une distance séparant une première station S1 de la sous-station SS vaut 1000 m, et une distance entre la première et une seconde station S2 vaut 1200 m (dans l'ordre droite vers gauche : SS, S1, s2). Les caractéristiques linéiques des rails de distribution de la tension du sol vers les trains sont prises en compte et valent 22 mΩ/m. Dans la simulation présentée ci-dessous, le premier train T1 part à t=40 s, le deuxième train T2 démarre au bout de 10 s tandis que le troisième train T3 part immédiatement à 0s.

Principalement, la méthode selon l'invention se fonde sur une méthode de réglage de tension d'alimentation électrique pour un fonctionnement d'au moins un véhicule, ici par exemple le premier train T1, (de type unité de transport public) alimenté par au moins :
- une première unité de stockage d'énergie électrique US1 embarquée dans ledit véhicule,
- un réseau électrique au sol SS fournissant au véhicule au moins un apport en énergie par application d'une tension d'alimentation Usol (= 750V) via un moyen de distribution (RAIL) électrique,
caractérisée en ce que
la première unité de stockage d'énergie US1 est commandable sous deux régimes dits générateur et récepteur, en ce que :
- en régime générateur, une tension d'alimentation algébriquement additive Uadd et provenant de la première unité de stockage électrique US1 est appliquée sur le moyen de distribution RAIL afin de maintenir une tension d'alimentation effective Urail au-dessus d'un seuil minimal prédéfini Urail_min;
- en régime récepteur, si un surplus de tension d'alimentation Urail provenant au moins partiellement d'une seconde unité de stockage US2 (par exemple ici en tant qu'unité embarquée dans le deuxième train T2) en régime générateur est détecté au-dessus du seuil minimal Urail_min, ce surplus est énergétiquement canalisé vers la première unité de stockage d'énergie US1 du premier véhicule s'il est requis pour le fonctionnement dudit premier véhicule et permet de maintenir la tension d'alimentation Urail sous un seuil maximal prédéfini Urail_max et au-dessus du seuil minimal prédéfini Urail_min.

La méthode selon l'invention prévoit que la seconde unité de stockage d'énergie, ici par exemple US2 ou une autre unité de stockage au sol ou embarquée, est choisie selon un schéma spatial et temporel de trafic de plusieurs véhicules, ici T1, T2, T3, et d'une infrastructure du réseau électrique au sol, ici SS, RAIL mais aussi, si prévue(s), d'unité de stockage d'énergie placée par exemple au sol dans au moins une des stations S1, S2. De cette façon, selon les disponibilités locales permettant des régimes générateurs ou émetteurs d'une ou de l'autre unité de stockage, la tension d'alimentation peut être effectivement régulée en fonction des besoins d'un des véhicules.

A cet effet, la seconde unité de stockage d'énergie peut avantageusement être embarquée dans au moins un second véhicule, ici le deuxième train T2 ou/et le troisième train T3. Des combinaisons linéaires de régimes générateurs (et analogiquement émetteurs) de diverses unités de stockage embarquées ou/et au sol peuvent ainsi être adoptées afin de réguler une tension d'alimentation requise pour un des véhicules.

Par ailleurs, la seconde unité de stockage US2 peut basculer en mode potentiellement générateur, en particulier lorsque le second véhicule est stationné en zone de garage/maintenance/livraison et qu'il dispose encore d'une énergie disponible exploitable pour réguler la tension d'alimentation effective de trains « actifs » dans le réseau de transport public. Ceci est particulièrement bien adapté lors d'heures creuses pendant lesquelles un plus grand nombre de trains sont stationnés en garage.

Alternativement ou complémentairement, la seconde unité de stockage d'énergie peut être placée et élue dans le cadre de la méthode selon l'invention dans le réseau électrique au sol, telle qu'à une station S1, S2 de véhicule, à une zone de garage de véhicule (lieu de charge), à une zone de distribution d'énergie d'un fournisseur ou à une zone d'alimentation d'énergie intermédiaire sur un trajet de véhicule.

Le moyen de distribution RAIL électrique est étendu soit de manière continue sur un trajet du véhicule entre deux stations, idéalement par un rail ou caténaire, soit de manière discontinue entre deux stations, idéalement par un rail ou caténaire de longueur finie autour d'une station. Si il est discontinu, des unités de stockage au sol peuvent servir de « pile » contribuant à assurer des échanges d'énergie entre les trains de façon à ce que ceux-ci puissent assurer autonomement une propre régulation de la tension d'alimentation effective suivant leur position dans le réseau de transport public. Plus généralement, dans le cas d'une distribution électrique discontinue, un régime générateur de la seconde unité de stockage est devancé temporellement par rapport au régime récepteur de la première unité de stockage, en prévoyant un stockage provisoire d'énergie dans une troisième unité de stockage liée au moyen de distribution (RAIL) et séquentiel-lement activée en régime récepteur puis générateur, complémentairement aux régimes successifs de la première et la seconde unité de stockage.

Il est aussi prévu que la première unité de stockage d'énergie (au même titre que toute autre unité de stockage embarquée) est rechargeable par récupération d'énergie provenant au moins d'une des sources suivantes :
- du véhicule, idéalement pendant son freinage ;
- du réseau électrique au sol ;
- d'autres unités du type de la seconde unité de stockage d'énergie qui, si embarquées récupère aussi l'énergie de freinage de leurs véhicules associées, ces autres unités jouant ainsi le rôle de moyen de transfert (régime générateur) de l'énergie intrinsèque d'une unité à une autre unité en régime récepteur, voire de manière instantanée sur une ligne.

Afin d'assurer des régimes générateurs et récepteurs flexiblement et rapidement activables, les unités de stockage d'énergie stockent et délivrent de l'énergie au moyen d'un élément capacitif de forte puissance tel qu'au moins un super-condensateur potentiellement associable à une batterie si nécessaire ou tout autre moyen hybridant le super-condensateur.

Afin de pouvoir mettre en oeuvre la méthode selon l'invention, l'unité de stockage d'énergie quelle qu'elle soit (embarquée ou non) est commandée par un algorithme de gestion pour un dimensionnement du besoin énergétique prenant en compte un schéma de trafic d'une pluralité de véhicules, un intervalle tolérable de la tension d'alimentation effective pour chacun des véhicules et, si disponible, un groupe d'unités complémentaires de stockage d'énergie au sol ou de véhicules en stationnement/maintenance. Ainsi, au moyen de ces informations, il est possible de définir des groupements d'unités/trains sous régimes générateurs (pare exemple en freinage) alors que d'autres unités/trains requièrent un régime récepteur par exemple pour leur démarrage.

L'algorithme de dimensionnement suit avantageusement une logique de minimisation de pic de puissance en provenance du réseau électrique au sol en compensant lesdits pics par des apports énergétiques distribués par au moins une unité de stockage d'énergie en régime générateur. Avantageusement encore, l'algorithme de gestion suit une logique de minimisation de la valeur maximale du courant utile délivré en station, du moins pour maintenir ladite valeur égale ou inférieure à un seuil-cible de consommation énergétique accordé par un distributeur du réseau électrique au sol. Des dépassements de consommation « normales » peuvent ainsi être évités au profit du gestionnaire du réseau de transport public tout en préservant l'environnement contre des surconsommations énergétiques importantes.

L'algorithme peut être centralisé et exécuté depuis un poste de contrôle au sol en communication avec des unités de contrôle et commande de véhicules et stations, mais il peut aussi être distribué sur des véhicules communiquant ensemble et pouvant ainsi gérer autonomement (ou en groupe) leur mise sous modes générateurs et récepteurs en fonction de schémas logiques sécuritaires.

Pratiquement, un calculateur pour la mise en oeuvre de la méthode est prévu et comprend :
- un module de détermination et gestion de la tension d'alimentation dans un intervalle imposée par le réseau électrique au sol et un seuil de tension minimale et maximale en ligne ;
- un module de commande des variations imposées aux niveaux de stockage et de délivrance d'énergie d'au moins une des unités de stockage d'énergie.

Ce calculateur est un support idéal pour exécuter l'algorithme précédemment décrit. Il peut donc être centralisé ou distribué dans les véhicules, stations ou/et au sol au moyen d'un réseau de communication adapté.

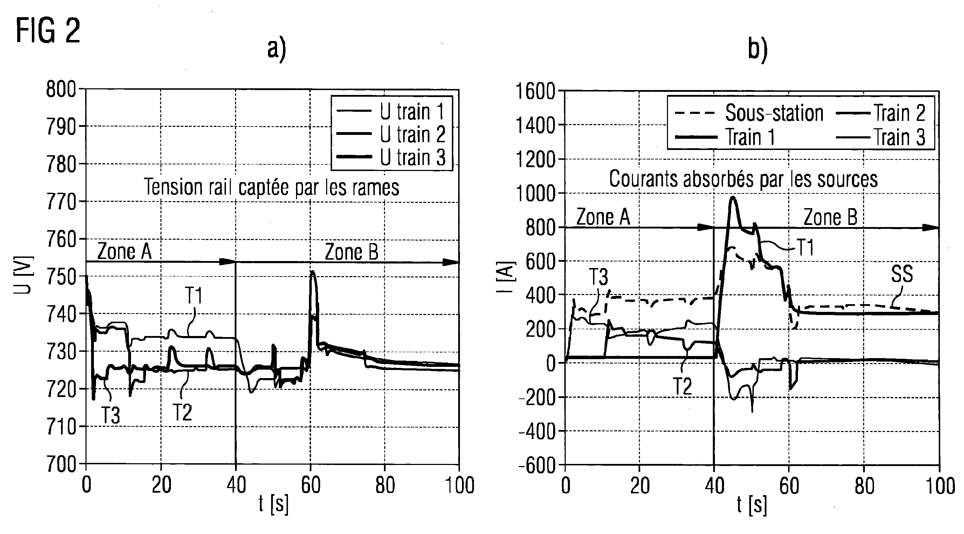

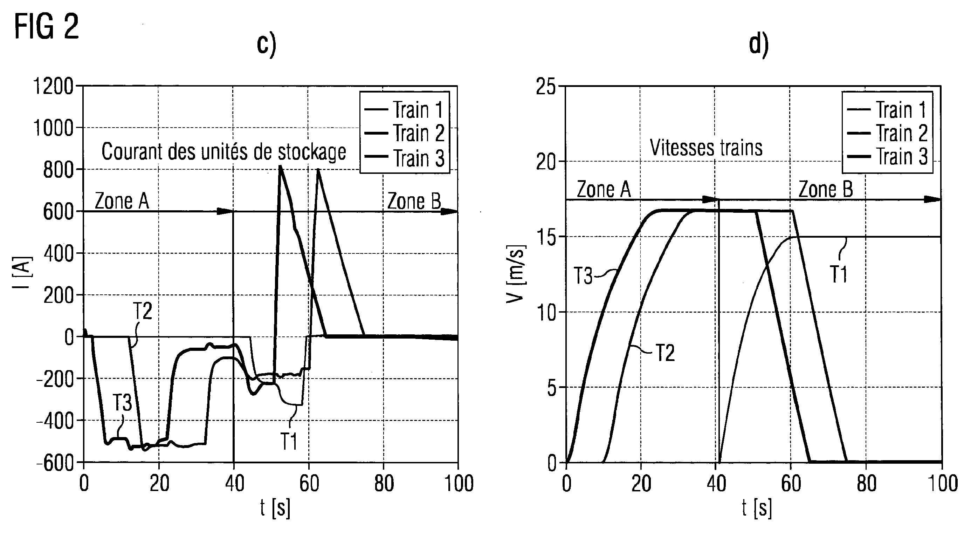

Avantageusement, le module de détermination et de gestion et le module de commande sont embarqués, afin de pouvoir rapidement et le plus autonomement possible prévoir et requérir un besoin sous régime récepteur ou alternativement signaler une disponibilité de basculement en régime générateur suivant la méthode selon l'invention. Selon les infrastructures du réseau de transport public, le calculateur peut donc être relié à une interface de communication entre sol et véhicule ou tout autre réseau de communication permettant au moins de transmettre des informations de besoin ou disponibilité d'énergie d'un train à un autre, le cas échéant via ou avec des unités de stockage d'énergie en station.
Revenant à la figure 1 et la figure 2 qui y est directement associée, les instants de départ des trois trains T1, T2, T3 ont ici été choisis de manière à répondre à une configuration pouvant être rencontrée dans l'exploitation d'un système réel. Les résultats ou paramètres liés à la méthode selon l'invention sont présentés à la Figure 2. Deux zones temporelles A et B permettent d'analyser le fonctionnement de cette configuration. La zone A est relative au démarrage des deuxième et troisième trains T2, T3, respectivement à t=10s et t=0s, et la zone B débute à t=40s pour le démarrage du premier train T1. En zone A, on constate que la tension délivrée par les rails pour ces deux trains chute (courbes de la figure 2(a)) représentant la tension d'alimentation rail captée par les trains) ce qui actionne alors le fonctionnement de leurs unités de stockage US2, US3 sous régime générateur (courbes figure 2(c) = courant des unités de stockage). La participation desdites unités de stockage US2, US3 à la fourniture de l'énergie de propulsion est complémentaire à celle délivrée par la sous-station SS qui délivre un courant de l'ordre de 400 A (courbe pointillé figure 2(b) = courants absorbés par les sources d'énergie « fixes et potentielles »).
La zone de fonctionnement B concerne ensuite le démarrage du premier train T1, mais également les phases de ralentissement des deuxième et troisième trains T2, T3. Au démarrage du premier train T1 à t=40s, nous observons sur la figure 2(a) une baisse de la tension d'alimentation du rail Urail liée au premier train T1. Le premier train T1 se trouve donc dans une situation typique de régime récepteur souhaité. La figure 2(b) illustre la participation des deux autres sources mobiles qui fonctionnent alors sous mode générateur et qui concourent à la régulation de la tension des rails de distribution (courbes T2, T3). Les courants des sources mobiles T2, T3 sont alors utilisés sous mode générateur pour contribuer à la propulsion du premier train T1. Il est vérifiable que selon figure 2(b), le courant absorbé du premier train T1 est la somme algébrique des courants fournis par la sous-station SS et les deux autres trains T2, T3.
En d'autres termes, en régime générateur, une tension d'alimentation algébriquement additive Uadd et provenant des deuxième et troisième unités de stockage électrique US2, US3 est appliquée sur le moyen de distribution RAIL afin de maintenir une tension d'alimentation Urail au-dessus d'un seuil minimal prédéfini (Urail_min, non représenté) afin de répondre au régime récepteur du premier train T1. Un apport supplémentaire de tension ou courant d'alimentation (voir Usol, figure 1 en sous-station SS alimentant le rail) est donc avantageusement évité.
D'un point de vue du premier train T1 en régime récepteur, vu qu'un surplus de tension d'alimentation Urail provenant de la seconde et la troisième unité de stockage US2, US3 en régime générateur est détecté au-dessus du seuil minimal (Urail_min, non représenté), ce surplus est énergétiquement canalisé vers la première unité de stockage d'énergie US1 dudit premier train T1 sachant qu'il est requis pour le fonctionnement dudit train et permet de maintenir la tension d'alimentation Urail sous un seuil maximal prédéfini (Urail_max, non représenté) (pour une compensation de crête en puissance) et au-dessus du seuil minimal prédéfini (Urail_min) (utile pour mouvoir le premier train).

## Revendications

1. Méthode de réglage de tension d'alimentation électrique pour un fonctionnement d'au moins un véhicule alimenté par au moins :
- une première unité de stockage d'énergie électrique (US1) embarquée dans le véhicule,
- un réseau électrique au sol fournissant au véhicule au moins un apport en énergie par application d'une tension d'alimentation (Usol) via un moyen de distribution (RAIL) électrique,
où la première unité de stockage d'énergie (US1) est commandable sous deux régimes dits générateur et récepteur, **caractérisée en ce que** :
- en régime générateur, une tension d'alimentation algébriquement additive (Uadd) et provenant de la première unité de stockage électrique (US1) est appliquée sur le moyen de distribution (RAIL) afin de maintenir une tension d'alimentation (Urail) au-dessus d'un seuil minimal prédéfini (Urail_min);
- en régime récepteur, si un surplus de tension d'alimentation (Urail) provenant au moins partiellement d'une seconde unité de stockage (US2) en régime générateur est détecté au-dessus du seuil minimal (Urail_min) , ce surplus est énergétiquement canalisé vers la première unité de stockage d'énergie (US1) dudit véhicule s'il est requis pour le fonctionnement dudit véhicule et permet de maintenir la tension d'alimentation (Urail) sous un seuil maximal prédéfini (Urail_max) et au-dessus du seuil minimal prédéfini (Urail_min).

2. Méthode selon revendication 1, pour laquelle la seconde unité de stockage d'énergie est choisie selon un schéma spatial et temporel de trafic de plusieurs véhicules et d'une infrastructure du réseau électrique au sol.

3. Méthode selon une des revendications 1 à 2, pour laquelle la seconde unité de stockage d'énergie est embarquée dans au moins un second véhicule.

4. Méthode selon revendication 3, pour laquelle la seconde unité de stockage bascule en mode potentiellement générateur, en particulier lorsque le second véhicule est stationné en zone de garage/maintenance/livraison.

5. Méthode selon une des revendications 1 à 2, pour laquelle la seconde unité de stockage d'énergie est placée dans le réseau électrique au sol, telle qu'à une station de véhicule, à une zone de garage de véhicule, à une zone de distribution d'énergie d'un fournisseur ou à une zone d'alimentation d'énergie intermédiaire sur un trajet de véhicule.

6. Méthode selon une des revendications précédentes, pour laquelle le moyen de distribution (RAIL) électrique est étendu soit de manière continue sur un trajet du véhicule entre deux stations, idéalement par un rail ou caténaire, soit de manière discontinue entre deux stations, idéalement par un rail ou caténaire de longueur finie autour d'une station.

7. Méthode selon revendication 6, pour laquelle, dans le cas d'une distribution électrique discontinue, un régime générateur de la seconde unité de stockage est devancé temporellement par rapport au régime récepteur de la première unité de stockage, en prévoyant un stockage provisoire d'énergie dans une troisième unité de stockage liée au moyen de distribution (RAIL) et séquentiellement activée en régime récepteur puis générateur, complémentairement aux régimes successifs de la première et la seconde unité de stockage.

8. Méthode selon une des revendications précédentes, pour laquelle la première unité de stockage d'énergie est rechargeable par récupération d'énergie provenant au moins d'une des sources suivantes :
- du véhicule, idéalement pendant son freinage ;
- du réseau électrique au sol ;
- d'autres unités du type de la seconde unité de stockage d'énergie qui, si embarquées récupère aussi l'énergie de freinage de leurs véhicules associées.

9. Méthode selon une des revendications précédentes, pour laquelle les unités de stockage d'énergie stockent et délivrent de l'énergie au moyen d'un élément capacitif de forte puissance tel qu'au moins un super-condensateur potentiellement associable à une batterie.

10. Méthode selon une des revendications précédentes, pour laquelle l'unité de stockage d'énergie est commandée par un algorithme de dimensionnement et gestion du besoin énergétique prenant en compte un schéma de trafic d'une pluralité de véhicules, un intervalle tolérable de la tension d'alimentation pour chacun des véhicules et, si disponible, un groupe d'unités complémentaires de stockage d'énergie au sol.

11. Méthode selon revendication 10, pour laquelle l'algorithme de dimensionnement suit une logique de minimisation de pic de puissance en provenance du réseau électrique au sol en compensant lesdits pics par des apports énergétiques distribués par au moins une unité de stockage d'énergie en régime générateur.

12. Méthode selon revendication 10 ou 11, pour laquelle l'algorithme de dimensionnement et gestion suit une logique de minimisation de la valeur maximale du courant utile délivré en station, du moins pour maintenir ladite valeur égale ou inférieure à un seuil-cible de consommation énergétique accordé par un distributeur du réseau électrique au sol.

13. Calculateur pour la mise en oeuvre de la méthode selon une des revendications précédentes comprenant :
- un module de détermination et gestion de la tension d'alimentation dans un intervalle imposée par le réseau électrique au sol et un seuil de tension minimale et maximale en ligne ;
- un module de commande des variations imposées aux niveaux de stockage et de délivrance d'énergie d'au moins une des unités de stockage d'énergie.

14. Calculateur selon revendication 13, pour lequel le module de détermination et gestion et le module de commande sont embarqués.

15. Calculateur selon revendication 13 ou 14, relié par une interface de communication entre sol et véhicule.

## Patentansprüche

1. Verfahren zur Regelung der elektrischen Versorgungsspannung für einen Betrieb wenigstens eines Fahrzeugs, das gespeist wird von wenigstens:
- einer ersten elektrischen Energiespeichereinheit (US1) an Bord des Fahrzeugs,
- einem Stromnetz am Boden, durch welches das Fahrzeug wenigstens eine Zufuhr von Energie durch Anlegen einer Versorgungsspannung (Usol) über ein Stromverteilungsmittel (RAIL) erfährt,
wobei die erste Energiespeichereinheit (US1) in zwei Betriebsarten, Erzeuger- und Empfänger-Betriebsart genannt, steuerbar ist,
**dadurch gekennzeichnet, dass**:
- in der Erzeuger-Betriebsart eine rechnerisch additive Versorgungsspannung (Uadd), die von der ersten elektrischen Speichereinheit (US1) stammt, an das Verteilungsmittel (RAIL) angelegt wird, um eine Versorgungsspannung (Urail) über einem vordefinierten minimalen Schwellenwert (Urail_min) zu halten;
- in der Empfänger-Betriebsart, falls ein Überschuss an Versorgungsspannung (Urail), der wenigstens teilweise von einer zweiten Speichereinheit (US2) in der Erzeuger-Betriebsart stammt, über dem minimalen Schwellenwert (Urail_min) erkannt wird, dieser Überschuss energietechnisch zu der ersten Energiespeichereinheit (US1) des Fahrzeugs hin kanalisiert wird, falls er für den Betrieb des Fahrzeugs benötigt wird und ermöglicht, die Versorgungsspannung (Urail) unter einem vordefinierten maximalen Schwellenwert (Urail_max) und über dem vordefinierten minimalen Schwellenwert (Urail_min) zu halten.

2. Verfahren nach Anspruch 1, wobei die zweite Energiespeichereinheit gemäß einem räumlichen und zeitlichen Schema des Verkehrs mehrerer Fahrzeuge und einer Infrastruktur des Stromnetzes am Boden gewählt wird.

3. Verfahren nach einem der Ansprüche 1 bis 2, wobei sich die zweite Energiespeichereinheit an Bord wenigstens eines zweiten Fahrzeugs befindet.

4. Verfahren nach Anspruch 3, wobei die zweite Speichereinheit insbesondere dann in eine potentielle Erzeuger-Betriebsart umschaltet, wenn das zweite Fahrzeug in einem Abstell-/Instandhaltungs-/Lieferbereich geparkt ist.

5. Verfahren nach einem der Ansprüche 1 bis 2, wobei die zweite Energiespeichereinheit im Stromnetz am Boden angeordnet ist, wie etwa an einer Fahrzeughaltestelle, in einem Fahrzeugabstellbereich, in einem Energieverteilungsbereich eines Versorgers oder in einem Zwischen-Energieversorgungsbereich an einer Fahrzeugstrecke.

6. Verfahren nach einem der vorhergehenden Ansprüche, wobei sich das Stromverteilungsmittel (RAIL) entweder durchgehend auf einer Fahrstrecke des Fahrzeugs zwischen zwei Stationen, idealerweise über eine Schiene oder Fahrleitung, oder mit Unterbrechung zwischen zwei Stationen, idealerweise über eine Schiene oder Fahrleitung von begrenzter Länge um eine Station herum, erstreckt.

7. Verfahren nach Anspruch 6, wobei im Falle einer Energieverteilung mit Unterbrechung eine Erzeuger-Betriebsart der zweiten Speichereinheit der Empfänger-Betriebsart der ersten Speichereinheit zeitlich vorausgeht, wobei eine vorübergehende Speicherung von Energie in einer dritten Speichereinheit vorgesehen wird, die mit dem Verteilungsmittel (RAIL) verbunden ist und nacheinander in der Empfänger-Betriebsart und dann in der Erzeuger-Betriebsart aktiviert wird, komplementär zu den aufeinander folgenden Betriebsarten der ersten und der zweiten Speichereinheit.

8. Verfahren nach einem der vorhergehenden Ansprüche, wobei die erste Energiespeichereinheit durch Rückgewinnung von Energie wiederaufladbar ist, die von wenigstens einer der folgenden Quellen stammt:
- vom Fahrzeug, idealerweise während seiner Bremsung;
- vom Stromnetz am Boden;
- von anderen Einheiten vom Typ der zweiten Energiespeichereinheit, die, falls sie sich an Bord eines Fahrzeugs befinden, ebenfalls die Bremsenergie ihrer zugehörigen Fahrzeuge zurückgewinnen.

9. Verfahren nach einem der vorhergehenden Ansprüche, wobei die Energiespeichereinheiten Energie mittels eines kapazitiven Elements von hoher Leistung, wie etwa wenigstens eines Superkondensators, der potentiell mit einer Batterie assoziierbar ist, speichern und abgeben.

10. Verfahren nach einem der vorhergehenden Ansprüche, wobei die Energiespeichereinheit durch einen Algorithmus zur Dimensionierung und Verwaltung des Energiebedarfs gesteuert wird, welcher ein Schema des Verkehrs einer Vielzahl von Fahrzeugen, ein zulässiges Intervall der Versorgungsspannung für jedes der Fahrzeuge und, falls verfügbar, eine Gruppe von ergänzenden Energiespeichereinheiten am Boden berücksichtigt.

11. Verfahren nach Anspruch 10, wobei der Algorithmus zur Dimensionierung einer Logik der Minimierung der vom Stromnetz am Boden stammenden Leistungsspitze folgt, indem diese Spitzen durch Energiezufuhren kompensiert werden, die von wenigstens einer Energiespeichereinheit in der Erzeuger-Betriebsart verteilt werden.

12. Verfahren nach Anspruch 10 oder 11, wobei der Algorithmus zur Dimensionierung und Verwaltung einer Logik der Minimierung des maximalen Wertes des an einer Station abgegebenen Nutzstroms folgt, wenigstens um diesen Wert gleich einem oder kleiner als einen Zielschwellenwert des Energieverbrauchs zu halten, der von einem Verteiler des Stromnetzes am Boden vorgegeben wird.

13. Rechner für die Durchführung des Verfahrens nach einem der vorhergehenden Ansprüche, welcher umfasst:
- ein Modul zur Bestimmung und Verwaltung der Versorgungsspannung in einem Intervall, die durch das Stromnetz am Boden und einen Schwellenwert der minimalen und maximalen Leitungsspannung vorgegeben ist;
- ein Modul zur Steuerung der Änderungen, die an den Niveaus der Speicherung und Abgabe von Energie wenigstens einer der Energiespeichereinheiten vorgenommen werden müssen.

14. Rechner nach Anspruch 13, wobei sich das Modul zur Bestimmung und Verwaltung und das Modul zur Steuerung an Bord befinden.

15. Rechner nach Anspruch 13 oder 14, der über eine Schnittstelle zur Kommunikation zwischen Boden und Fahrzeug angeschlossen ist.

## Claims

1. Method of adjusting the electrical supply voltage for operation of at least one vehicle supplied by at least:
- a first electrical energy storage unit (US1) on board the vehicle,
- a ground electrical network providing the vehicle at least with a supply of energy by application of a supply voltage (Usol) via a means of electrical distribution (RAIL),
wherein
the first energy storage unit (US1) is controllable under two regimes termed generator and receiver, **characterised in that**:
- in the generator regime, an algebraically additive (Uadd) supply voltage originating from the first electrical storage unit (US1) is applied to the distribution means (RAIL) so as to maintain a supply voltage (Urail) above a predefined minimum threshold (Urail_min);
- in the receiver regime, if a surplus of supply voltage (Urail) originating at least partially from a second storage unit (US2) in the generator regime is detected above the minimum threshold (Urail_min), this surplus is channelled energetically to the first energy storage unit (US1) of said vehicle if it is required for the operation of said vehicle and makes it possible to maintain the supply voltage (Urail) below a predefined maximum threshold (Urail_max) and above the predefined minimum threshold (Urail_min).

2. Method according to claim 1, for which the second energy storage unit is selected according to a spatial and temporal traffic pattern for several vehicles and a ground electrical network infrastructure.

3. Method according to one of claims 1 to 2, for which the second energy storage unit is installed in at least a second vehicle.

4. Method according to claim 3, for which the second storage unit switches into potentially generator mode, in particular when the second vehicle is parked in a garage/maintenance/delivery zone.

5. Method according to one of claims 1 to 2, for which the second energy storage unit is placed in the ground electrical network, such as at a vehicle station, a vehicle garage zone, a supplier's energy distribution zone or an intermediate energy supply zone on a vehicle route.

6. Method according to one of the preceding claims, for which the means of electrical distribution (RAIL) extends either continuously along a vehicle route between two stations, ideally by a rail or a catenary, or discontinuously between two stations, ideally by a rail or a catenary of finite length around a station.

7. Method according to claim 6, for which, in the case of discontinuous electrical distribution, a generator regime of the second storage unit is advanced temporally with respect to the receiver regime of the first storage unit, anticipating provisional energy storage in a third storage unit linked to the means of distribution (RAIL) and sequentially activated in receiver then generator regime, complementarily to the successive regimes of the first and the second storage unit.

8. Method according to one of the preceding claims, for which the first energy storage unit is rechargeable by energy recovery originating from at least one of the following sources:
- from the vehicle, ideally during braking
- from the ground electrical network
- from other units of the type of the second energy storage unit which, if on-board, also recover the braking energy of their associated vehicles.

9. Method according to one of the preceding claims, for which the energy storage units store and deliver energy by means of a high-power capacitive element such as at least one super-capacitor potentially associable with a battery.

10. Method according to one of the preceding claims, for which the energy storage unit is controlled by an algorithm for sizing and management of the energy requirement, taking account of a traffic pattern for a plurality of vehicles, a tolerable supply voltage interval for each of the vehicles and, if available, a group of complementary ground energy storage units.

11. Method according to claim 10, for which the sizing algorithm follows a logic of minimization of the peak power originating from the ground electrical network, compensating for said peaks by energy supplies distributed by at least one energy storage unit in generator regime.

12. Method according to claim 10 or 11, for which the sizing and management algorithm follows a logic of minimization of the maximum value of the effective current delivered at a station, at least to maintain said value equal to or below a target threshold for energy consumption assigned by a ground electrical network distributor.

13. Computer for implementing the method according to one of the preceding claims, including:
- a module for determining and managing the supply voltage in an interval imposed by the ground electrical network and a minimum and maximum on-line voltage threshold
- a module for controlling the variations imposed on energy storage and delivery levels of at least one of the energy storage units.

14. Computer according to claim 13, for which the determination and management module and the control module are on-board.

15. Computer according to claim 13 or 14, connected by a communication interface between ground and vehicle.
